# EUROPEAN PATENT APPLICATION

(11) **EP 4 826 701 A1**
(43) Date of publication of application: **21.10.2026**
(21) Application number: 25170515.8
(22) Date of filing: 14.04.2025
(51) Int. Cl.: G09B 23/32, G01K 17/06, G01M 17/007

(54) **DUMMY TARGET WITH ADJUSTABLE SURFACE TEMPERATURE FOR (ACTIVE) SAFETY TESTING**

(71) Applicant: 4Activesystems GmbH, 8772 Traboch (AT)
(72) Inventor: Fritz, Martin, 8723 Kobenz (AT)
(74) Representative: Dilg, Haeusler, Schindelmann Patentanwaltsgesellschaft mbH

(57) **Abstract**

The present invention relates to a dummy device (100) for testing driver assistance systems in vehicles. The dummy device (100) comprises a dummy body (101), and a temperature-controlling device installed in the dummy body (101),
wherein the temperature-controlling device comprises at least two temperature-controlling elements. Each temperature-controlling element is installed in different body sections of the dummy body (101) for adjusting a temperature of the surface areas (201) of the dummy body (101).

## Description

### Field of invention

The present invention relates to a dummy device with temperature adjustable surface areas for testing driver assistance systems in vehicles. Furthermore, the present invention relates to a method for testing driver assistance systems in vehicles with the described temperature adjustable dummy device.

### Art Background

Active safety testing is an important component in the development of driver assistance systems in modern vehicles, aimed at preventing accidents. Many safety requirements are mandatory for new vehicles. For example, new generations of driver assistance systems of vehicles must be able to avoid accidents in more and more advanced traffic scenarios.

Many features of the test dummies are becoming important for vehicle sensors to acquire information upon which the active safety systems built-in the vehicles can act upon in order to prevent accidents. The fact that each body radiates specific radiation, such as temperature radiation of human bodies or radar reflection of parts of the vehicle, is a parameter for an active safety system to identify a traffic member and to make changes to the behavior of the vehicle.

Hence, it is difficult to simulate real life traffic scenarios since vehicle dummies or human dummies have different radiation characteristics (e.g. radar or thermal radiation) in comparison to real vehicles or humans.

### Summary of the Invention

There may be a need to provide dummies for simulating a vehicle or a human which comprises radiation characteristics that comply better with real vehicles or humans.

This need may be met by a dummy device for testing driver assistance systems in vehicles with a dummy device and by a method for testing driver assistance systems in vehicles with a dummy device according to the independent claims.

According to a first aspect, a dummy device for testing driver assistance systems in vehicles is described. The dummy device comprises a dummy body and a temperature-controlling (i.e. temperature adjusting) device installed in the dummy body. The temperature-controlling device comprises at least two temperature-controlling (i.e. temperature adjusting) elements, wherein each temperature-controlling element is installed in different body sections of the dummy body for individually and separately adjusting a temperature of different surface areas of the dummy body.

According to a further aspect, a method for testing driver assistance systems in vehicles with an above-described dummy device is presented. The method comprises an adjusting of a temperature of a surface area of the dummy body by the at least one two temperature-controlling elements.

According to a further aspect a dummy device for testing driver assistance systems in vehicles is described. The dummy device comprises a dummy body and an infrared radiation device installed in the dummy body, wherein the infrared radiation device comprises at least one infrared emitting element which is configured for simulating a temperature profile of a surface area of the dummy body by generating an infrared radiation that is indicative for the temperature profile measured by an infrared sensor of the driver assistance system to be tested.

A driver assistance system may comprise specifically a variety of specific sensors to receive measured parameters that provide sufficient data to determine and calculate a traffic situation in the environment of the vehicle to be tested. For example, the driver assistance systems comprise radar sensors and temperature sensors in order to measure and classify respective traffic members and the environment of the vehicle. For example, a specific measured temperature and specifically a measured specific temperature profile of an item in the environment of the vehicle to be tested can be indicative for example a car, motorcycle or a human. Hence, it is an aim of the present invention to provide a dummy device which comprises similar characteristics of a specific radiation (for example reflected radar waves or temperature radiation) which radiation is identical or at least very similar to a respective real object (for example a car or human) in the environment of the vehicle.

The dummy body may simulate the shape and the design of a traffic member in a real traffic. Accordingly, the dummy body may have a shape of a vehicle, such as a car, a bicycle or a motorcycle. Furthermore, the dummy body may have a shape of a living being such as a human (adult or child), a pet or a wild animal. It is also possible that the dummy body may have a shape of traffic items, such as a traffic light or a traffic sign.

The dummy body may also comprise movable parts, such as extremities (arms, legs) or wheels. Hence, the dummy body simulates a highly realistic internal movement characteristic of e.g. leg movements, matching certain movement patterns, for example those of walking, running and racing of a human, is possible.

The dummy body comprises an internal supporting structure, such as a framework, which is covered by a respective cover surface or skin. To the supporting structure a plurality of functional devices of the dummy device may be fixed, for example the below described control unit or energy source unit. Furthermore, several activators, such as electric motors, for controlling and moving the movable body parts of the dummy body are installed within the dummy body and fixed to the internal supporting structure.

According to the approach of the present invention, a temperature-controlling device is used which comprises at least two temperature-controlling element. The temperature-controlling element is configured for adjusting (raising and/or lowering) a temperature of a surface area of the dummy body. The surface area of the dummy body describes a specific surface section or the complete surface of the dummy body which surface area faces the environment of the dummy device. In an exemplary embodiment, the surface area may be covered by a protective layer.

Hence, by the approach of the present invention to use a temperature-controlling device, a temperature of a surface area of the dummy body can be quickly and exactly adjusted. Hence, the respective surface area of the dummy body may comprise similar temperature and temperature profiles as a real object that is simulated by the dummy body. For example, a surface area simulating a bonnet cover of a car simulated by the dummy body or a specific human part, such as a hand or an arm simulated by the dummy body, can be adjusted similarly as a real object to be simulated. Hence, since the thermal radiation of the dummy body is adjusted similarly to a real object to be simulated, a realistic test scenario for the sensors in a driver assistance system can be provided. Thus, an improved test setup for simulating a realistic traffic in order to test a driver assistance system is provided by the dummy device according to the present invention.

Specifically, the temperature-controlling device comprises at least two temperature-controlling elements, wherein each temperature-controlling element is installed in different body sections of the dummy body for adjusting a temperature of different surface areas of the dummy body. The mentioned surface areas may be arranged adjacent and in connection with respect to each other or may be arranged spaced apart from each other. Hence, a wide overall surface area of the dummy body can be temperature adjusted by the resistance temperature-controlling elements.

According to another approach of the present invention, alternatively or additionally to the temperature-controlling device, an infrared radiation device may be installed in the dummy body. The infrared radiation device comprises at least one infrared emitting element which is configured for simulating a temperature profile of a surface area of the dummy body by generating an infrared radiation that is indicative for the temperature profile measured by an infrared sensor of the driver assistance system to be tested. The infrared radiation device may comprise radiation emitters, such as diodes which radiate respective infrared radiation which can be measured by respective infrared sensors of the driver assistance system to be teste. The infrared radiation generated by the infrared radiation device at a specific surface area of the dummy body is indicative of a specific heat radiation at respective surface area of an object to be simulated by the dummy body.

According to a further exemplary embodiment, each temperature-controlling element can be controlled individually such that the temperature of each surface area of a body section is individually adjustable. For example, if the dummy body comprises a shape for human body for simulating a human, one surface area defines for example a head section and another surface area defines stomach section of the human body. The real human radiates at different surface areas different temperature radiation. In other words, the head of a human may be hotter and therefore radiates more temperature radiation than for example a food section of a human. Hence, by the different temperature-controlling elements, different surface areas of the dummy body can be differently (i.e. heated or cooled) temperature-controlled and therefore radiate different temperature radiation so that the dummy body simulates a real object to be simulated more exact.

According to a further exemplary embodiment, the temperature-controlling device comprises more than 2, 4, 6, 10 or 12 temperature-controlling elements. For example four to nine, in particular five to seven temperature-controlling elements are provided. Hence, it is outlined that the plurality of surface areas of a dummy body can be differently temperature-controlled with respect to each other by the plurality of temperature-controlling elements.

According to a further exemplary embodiment, the temperature-controlling device (and a heat temperature-controlling ting element, respectively) is configured to heat the surface area of the dummy body up to 45° C. In other words, the resistance temperature-controlling device and its respective temperature-controlling elements heat the surface area up to specifically a maximum of 45°C. Specifically for simulating a human body, hotter surface areas are not necessary since body temperature for human does not exceed 45°C. Thus, the temperature-controlling device can be designed very efficiently without needing much energy. However, in alternative embodiments, if for example a surface area of a motor section of a dummy body simulating for example a car as to be simulated, the resistance temperature-controlling elements may be designed to heat up the surface area to 200°C to 300°C.

According to a further exemplary embodiment, the temperature-controlling elements comprise resistance heating elements installed in the dummy body, wherein the resistance heating device comprises at least two resistance heating element which is configured for adjusting a temperature of a surface area of the dummy body.

The resistance heating element is an element for conversion of electric energy into heat. The heating element comprises a heating resistor, so that heat is generated by the passage of electric current through a resistor through a process known as Joule heating. The heating element transfers heat in particular via radiation. The resistance heating element may be formed of a plurality of conductor cables, fibers or platelike elements comprising a respective heating resistors in order to generate heat. The resistance heating elements may be made partially of electrically conductive materials, such as metal material or electrically conductive carbon material. Hence, by a resistance heating element, the temperature of a surface area can be adjusted very quick and exact.

According to a further exemplary embodiment, at least one of the resistance heating elements comprises electrically conductive fibers for generating heat, wherein the electrically conductive fibers are made of metal material or carbon fibers. The fibers of metal or carbon material can quickly generate heat and can be easily regulated by the applied voltage. Carbon fiber heaters are placed beneath the surface area of the dummy body and for example the final protective layer of the dummy body and distributed in areas where thermal properties are expected, for example, at human dummies or vehicle dummies, e.g. motor, exhaust, brakes, etc.

According to a further exemplary embodiment, the heating element comprises a matrix material in which the electrically conductive fibers are inserted. The matrix material may be made of an electrically isolating material. At the same time, the matrix material may comprise proper temperature thermal conductive capacity. Hence, the matrix material provides the ability of the resistance heating elements on the one hand and the other provides to its proper temperature thermal conductive capacity a good distribution of thermal radiation generated by the fibers. Furthermore, the fibers may be attached on the supporting tape which can be fixed to a surface of the dummy body, for example.

According to a further exemplary embodiment, the fibers form a woven material, in particular a braided sleeve. A woven material may be made only of the fibers and may thus be very flexible and adaptable to a variety of different shapes. The woven material may be additionally impregnated and soaked with matrix material. Specifically, the woven fibers may form a fiber mat forming flat elements.

The fibre density in a resistance heating elements may be 100 g/m² to 700 g/m², in particular 200 g/m² to 400 g/m2· As a further example, the heating element comprises in particular 500 to 3500 fiber rovings/m², more in particular 1000-2000 fiber rovings/m². Specifically, having a fibre density in a resistance heating element of 100 g/m² to 700 g/m², the number of fibre rovings may be 500 to 3500 fiber rovings/m². Having a fibre density of 200g/m² to 400g/m² the number of fibre rovings may be 1000 to 2000 fiber rovings/m².

Additionally, the woven fibers may form a braided sleeve forming surrounding an inner sleeve volume. The sleeve volume may be filled by a respective body part of the dummy body, such as an arm or a leg of a human body to be heated.

By providing the woven material, a low density of fibers is necessary for generating sufficient temperature. Hence, the required energy is reduced. Furthermore, due to the low density, less influence on other kinds of radiation, such as radar reflection, is reduced by the low-density fibers. For example, due to the low density of fibers, the resistance heating elements may be transparent for optical sensors.

According to a further exemplary embodiment the resistance heating element comprises a supply cable running from the resistance heating element to the inside of the dummy body. Hence, the energy supplying connecting cables run inside the dummy body along the supporting structure (e.g. in the skeleton area of the dummy body) and not directly on the surface. Hence, the larger energy supply cables which could cause unnatural reflection characteristic especially for radar radiation are directed to the and through the inner volume of the dummy body, such that the outer skin of the dummy body covers the energy supply cables so that the impact on the radar reflection of radar radiation is low.

According to a further exemplary embodiment the dummy device further comprises an energy source unit for supplying the resistance heating unit with electrical energy, wherein the energy source unit is in particular a rechargeable battery unit. Hence, during the test procedure, energy can be taken from the energy source unit for the resistance heating device, so that during the test procedure the respective resistance heating elements can be heated for adjusting the surface area of the dummy body.

According to a further exemplary embodiment, the energy source unit is configured for transmitting electrical power with a voltage range between 9 V (Volts) and 60 V and/or with an electrical current range in the range of 20 A (Ampere) to 60 A. Specifically, when using a higher voltage between 50 V and 60 V, less power loss and a higher efficiency can be achieved.

According to a further exemplary embodiment, the energy source unit is configured for transmitting electrical power in a constant manner or in a pulsed manner. For example, transmitting the electrical power in a pulsed manner, and efficient heating of the resistance heating elements can be achieved. Furthermore, transmitting electrical power in a constant manner, a constant temperature of the surface area of the dummy body can be achieved which can provide a more realistic simulation of a real object to be simulated for the respective temperature sensors in a driver assistance system.

According to a further exemplary embodiment, the dummy device further comprises a low resistance connection contact arranged between the resistance heating element and the energy source unit and/or between two connected resistance heating element.

The low resistance connection element is configured for providing a resistance of less than 1 to 2 Ohm (with an applied voltage of 24 Volts) or 0,5 to 1 Ohm (with an applied voltage of 48 Volts).

According to a further exemplary embodiment, the dummy device comprises an external power connection which is electrically coupled to the resistance heating device, wherein the external power connection is configured for receiving electrical power from an external energy source. For example, in an inactive parking position of the dummy device, the external power connection can be connected with an external power supply such that the heating elements heat the surface area before the test procedure and the active operating state of the dummy device, respectively. Thus, in the parking position, the surface area of the dummy body is heated to a predefined temperature. Next, the dummy device is decoupled from the external power supply and a test procedure starts. During the test procedure, the surface area cools down slowly or is heated by thermal energy stored in the thermal storage layer. Hence, by a respective dummy device according to the above-mentioned exemplary embodiment, it is not necessary to install an energy source inside the dummy body. Hence, the weight and complexity of the dummy body may be reduced.

According to a further exemplary embodiment, the external power connection comprises a power plug for receiving electrical power from the external energy source. The external power connection may also comprise an inductive coil for providing an inductive power transmission. Hence, in a parking position of the dummy device, electrical power can be transmitted via induction without having a physical plug connection.

According to a further exemplary embodiment, the temperature-controlled elements comprise fluid temperature-controlled elements. Each of the fluid temperature-controlled elements comprise a fluid chamber configured to be flushed by a temperature-controlling fluid, in particular air, for adjusting a temperature of the different surface areas of the dummy body. The fluid temperature-controlled elements may comprise a housing having an inner volume for forming the fluid chamber, wherein the temperature-controlling fluid may stream through the chamber. The walls of the housing are heated or cooled by the temperature-controlled fluid. The walls of the housing are in thermal contact with the respective surface area of the dummy body so that thermal energy can be exchanged for temperature-controlling the respective surface. The housing may also be made of flexible material, so that the fluid temperature-controlled elements may form a kind of belows. The housing comprises a fluid inlet and a fluid outlet, such that the temperature-controlling fluid may be injected and exhausted from the inner volume of the housing.

At the respective fluid inlet end/or the fluid outlet, a respective control valve is provided in order to control the flow of temperature-controlling fluid into or outside of the housing. The control valve may be controlled by the below described control unit. Hence, by adjusting the flow of temperature-controlling fluid, an exact adjustment of the temperature can be achieved.

Temperature-controlling fluid may be in particular air. However, also a liquid, such as water or oil, can be used for temperature-controlling the fluid temperature-controlled elements. For example, if the temperature-controlling fluid is used to cool the surface area, a cooling fluid, such as Tetrafluoroethene (R134a) may be used. The temperature-controlling fluid may be received from a reservoir inside the dummy body, inside the below described platform or from a temporarily coupled external reservoir. If the temperature-controlling fluid is, the temperature-controlling fluid may be received from the surrounding air and maybe temperature-controlled for example by the below described fluid temperature-controlling unit inside the dummy body or the platform.

The fluid temperature-controlled (i.e. temperature adjusted by use of fluid) elements can be used to heat the surface areas. Hence, the temperature-controlling fluid may be heated and is thus hotter than the surface area to be heated and hence transfer thermal energy via the fluid temperature-controlled elements to the surface area. However, in comparison to the above-described resistance heating elements, the fluid temperature-controlled elements may also be used to cool the surface areas. This may be necessary, if the dummy body and the surface areas, respectively, are hotter than the object to be simulated. For example, if the dummy device is exposed to the sun and is therefore too hot for example if the dummy device is a human and the surface area is heated up to 60° due to the sun), the surface area can be cooled for example to 37°, similar to a body temperature of a human.

According to further exemplary embodiment, the temperature-controlling device comprises fluid ducts for coupling the fluid temperature-controlled elements (for example to couple two fluid temperature-controlled elements together or for coupling the fluid temperature-controlled elements to a central fluid supply unit) so that the temperature-controlling fluid is supplyable to or from the fluid temperature-controlled elements. The fluid ducts may be formed of flexible material and may be guided along the dummy body. Specifically, the fluid ducts may run inside the dummy body along the supporting structure (e.g. in the skeleton area of the dummy body) and not directly on the surface. Hence, the fluid ducts which could cause unnatural reflection characteristic especially for radar radiation are directed to the and through the inner volume of the dummy body, such that the outer skin of the dummy body covers the fluid ducts so that the impact on the radar reflection of radar radiation is low.

According to a further exemplary embodiment, the dummy device further comprises a fluid supply unit, in particular a fluid pump, for supplying the temperature-controlling fluid to the fluid temperature-controlled elements. The fluid supply unit may be for example an air blower. Furthermore, the fluid supply unit may also be liquid pump for pumping liquids temperature-controlling fluid. The fluid supply unit may be controlled by the control unit, so that dependent on the required temperature-controlling power, the fluid flow of the temperature-controlling fluid may be adjusted by the fluid supply unit.

According to an exemplary embodiment, the fluid supply unit is installed in the dummy device. Alternatively, the fluid supply unit may also be installed in the below described movable platform.

According to a further exemplary embodiment, the dummy device further comprises a fluid temperature-controlling unit for temperature-controlling the temperature-controlling fluid. The fluid temperature-controlling unit comprises a heating unit for heating the temperature-controlling fluid. Additionally or attentively, the fluid temperature-controlling unit comprises in particular a cooling unit for cooling the temperature-controlling fluid. The fluid temperature-controlling unit may also be controlled by the control unit.

The heating unit may comprise resistance heating elements that generate heat based on electric energy. For example by a heat exchanger, the thermal energy may be transferred to temperature-controlling fluid. Furthermore, the heating unit and/or the cooling unit may be formed of a heat pump working on the principle of a heat pump cycles or refrigeration cycles (Vapor-compression cycle).

The fluid temperature-controlling unit may be installed in the dummy device. Alternatively, the fluid temperature-controlling unit may also be installed in the below described movable platform.

According to a further exemplary embodiment, the dummy device comprises a fluid coupling which is coupled to the fluid temperature-controlled elements.

The fluid coupling is configured for receiving temperature-controlling fluid from an external fluid supply unit. The external fluid supply unit may be a fluid reservoir or an active fluid supply unit, such as a fluid pump. The fluid coupling may be configured to attach for example a fluid hose via e.g. a bayonet connection.

According to a further exemplary embodiment, the dummy device comprises a temperature distribution layer, wherein the temperature distribution layer is arranged between the heating element and the surface area of the dummy body. The temperature distribution layer comprises a higher thermal conductivity than the heating element. The temperature distribution layer may be the outermost layer of the dummy body or may be covered by a protective layer. The temperature distribution layer comprises due to its higher thermal conductivity than the heating element a more homogeneous temperature distribution along the surface area of the dummy body.

According to a further exemplary embodiment, the dummy device further comprises a thermal storage layer, wherein the thermal storage layer is arranged between the heating element and a surface area of the dummy body. The thermal storage layer comprises a higher thermal capacity than the heating element. The thermal storage layer may be in an exemplary embodiment arranged between the temperature distribution layer and the resistance heating element. The thermal storage layer may store the thermal energy, such that also without a continuous heat supply by the heating element, a continuous heating of the surface area is provided.

For example, in an inactive parking position of the dummy device, an energy connection with an external power supply can be provided such that the heating elements heat the surface area before the test procedure and the active operating state of the dummy device, respectively. Thus, in the parking position, the thermal storage layer is loaded by thermal energy and also be surface area of the dummy body is heated to a predefined temperature. Next, the dummy device is decoupled from the external power supply and a test procedure starts. During the test procedure, the surface area is heated by thermal energy stored in the thermal storage layer. Hence, by a respective dummy device according to the above-mentioned exemplary embodiment, it is not necessary to install an energy source into the dummy body. Hence, the weight and complexity of the dummy body may be reduced.

The thermal storage layer may comprise materials for providing a sensible heat accumulator which utilizes the physical property of materials to change their temperature (e.g. water, stone). Furthermore, the thermal storage layer may comprise materials for providing latent heat storage which stores heat by changing the phase of a material (e.g. melting and solidification). Furthermore, the thermal storage layer may comprise materials for providing thermochemical storage which utilizes chemical reactions to store and release heat.

According to a further exemplary embodiment, the dummy device further comprises a radar absorbing layer for absorbing radar radiation reflected by the temperature-controlling element. The radar absorbing layer is arranged between the temperature-controlling element and a surface area of the dummy body. Specifically, the radar absorbing layer may form an outer layer of the dummy body. Alternatively, the radar absorbing layer surrounds the respective temperature-controlling element.

Specifically, the radar absorbing layer may be arranged between the temperature-controlling element and other layers, such as the thermal storage layer or the temperature distribution layer. Radar absorbent material (RAM) can be used for the radar absorbing layer which is a material that can absorb incoming radar waves and suppress their reflection.

Accordingly, according to a further exemplary embodiment, the radar absorbing layer comprises a material, in particular Condura, having a radar permittivity similar to an object to be simulated by the dummy body. The material can do a may for example simulate clothes of a human being that is similar in many ways, for example. Cordura is of durable synthetic fabrics that are often made from nylon, polyester, or a blend of both. The thermal conductivity of a material is a measure of its ability to conduct heat. For textiles like Cordura, the thermal conductivity is typically quite low because textiles are generally insulating materials. The general range for nylon-based fabrics, like Cordura, tends to have thermal conductivity in the range of 0.2 to 0.4 W/m·K (watts per meter per Kelvin).

According to a further exemplary embodiment, the radar absorbing layer comprises a material having a real part of permittivity e' between 10 to 45, an imaginary part of permittivity of e"=between 3 to 20 and/or an effective conductivity σe=1-12 S/m when being penetrated with electromagnetic radiation between 5 and 85 GHz.

The quantity ε' (also referred to as ε'r or the real part of permittivity) represents the electric permittivity of a material and describes how strongly it influences an electric field. The formula for ε is: $ε = ε ′ - jε "$

ε' (Real part of permittivity) indicates how much electrical energy is stored in the material. A higher value means the material affects an electric field more strongly and is more "polarizable."

ε" (Imaginary part of permittivity) describes energy losses within the material, such as energy converted into heat or other forms of dissipation.

σₑ represents the effective conductivity (also called electrical conductivity) of a material, measured in Siemens per meter (S/m). It quantifies how well a material conducts electric current.

The formula for σe is: $σe = 2 {πfε}_{0} {ε}_{r} "$
σₑ is the Effective conductivity (S/m)
f is the frequency (Hz)
ε₀ is the permittivity of free space (8.854 × 10⁻¹² F/m)
ε"r is the imaginary part of the relative permittivity

A high ε' value means the material has a high capacity for storing electrical energy (e.g., water or human tissue). Materials with a low ε' (e.g., air, plastics) have minimal impact on electric fields. The ε" value is crucial for losses, especially in high-frequency applications.

Higher σₑ means the material allows electric currents to pass more easily (e.g., metals, saline water, human tissue). Lower σₑ indicates poor conductivity (e.g., plastics, air, dry skin). In biological tissues, σₑ is frequency-dependent and plays a key role in RF (radio frequency) and microwave interactions with the human body. σₑ may be used to compare different materials with human tissue to ensure that the surrogate material mimics the electrical properties of real skin and tissues.

By the parameters described above it has found out that under influence of electromagnetic radiation between 5 and 85 GHz the electrical properties of a respective material for the radar absorbing layer a proper simulation of (human or animal) tissue is given and hence to create a realistic surrogate for high-frequency applications is given.

According to a further exemplary embodiment, the dummy device further comprises a control unit, wherein the control unit is connected to the temperature-controlling device for controlling the temperature-controlling device and/or for receiving status information of temperature-controlling device. The control unit controls specifically the supply of the temperature-controlling fluid and/or energy, specifically the supply power and voltage, for the resistance heating elements, in order to adjust the temperature radiation of the surface area of the dummy body. The control unit may comprise an input interface by which a predefined temperature-controlling fluid or supply energy or a predefined temperature value can be input and the control unit is configured for adjusting the temperature-controlling elements accordingly. Additionally, the control unit may comprise a storage unit for control data, so that the control unit may take the respective control data from the storage unit during the test procedure. As described below, the control unit may also receive respective control data from an external unit via an interface element for transmitting the data wire bond or wireless.

Furthermore, the control unit may receive status information of the temperature-controlling device and the temperature-controlling elements, respectively. Status information may be for example current temperature values determined for example by the below-described temperature sensors. Furthermore, the status information may comprise voltage or electrical power values in order to determine for example the operating state or if certain defects in the resistance heating elements exist. Furthermore, the status information may be the temperature of a temperature-controlling fluid entering or leaving the specific fluid temperature-controlled element.

According to a further exemplary embodiment, the control unit comprises an interface element configured for receiving control signals for controlling the temperature-controlling device and/or for transmitting status information of the temperature-controlling device.

According to a further exemplary embodiment, the interface element comprises a wireless transmitter configured for receiving control signals and/or for transmitting status information of the temperature-controlling device in a wireless manner. The wireless transmitter may transfer the respective status information or control signals, for example via Bluetooth, NFC (near field communication) or WLan.

According to a further exemplary embodiment, the interface element comprises a plug connection configured for receiving control signals and/or for transmitting status information of the temperature-controlling device in a wire bond manner. The plug connection is for example a USB connection for exchanging data. For example, the control data may be input via a plug connection to the control unit in an inactive operation state of the dummy device. The control unit stores the respective data and controls based on the received data the temperature-controlling device in an active state of the dummy device during a test procedure. Furthermore, the storage unit of the control unit may store the operational data and stator status of the temperature-controlling device during the test procedure, wherein after the test procedure in an inactive state of the dummy device, a data cable may be connected to the plug connection for receiving the start data.

According to a further exemplary embodiment, the control unit is installed within the dummy body. In the exemplary embodiment it is outlined that the control unit is included in the dummy body. In an alternative embodiment, the control unit may be installed as described below for example in a movable platform to which the dummy device is mounted.

According to a further exemplary embodiment, the dummy device further comprises a movable platform movable along a ground, wherein the dummy body is attached onto the movable platform. The platform may have a base body, which may form a sheet-like (board-like) shape. This means that its extension within a ground plane may be significantly greater than its thickness in, for example, the vertical direction. The platform has a bottom surface and an opposing attachment surface to which the dummy device is attached. Roller elements are attached to the bottom surface to provide a movement of the platform along the ground. The dummy body is fixed by an attachment device, for example by a removable screw or plug connection, or by a magnetic force to the platform.

According to a further exemplary embodiment the control unit is installed in the dummy device. In a further exemplary embodiment, the control unit is installed in the platform. For example, the energy source unit may be installed inside the dummy body and upon receipt of control signals from the control unit in the platform, a respective electrical power is provided for the resistance heating elements. As a further example, the fluid supply unit may be installed inside the dummy body and upon receipt of control signals from the control unit in the platform, a respective flow of respectively temperature-controlled temperature-controlling fluid is provided for the fluid temperature-controlled elements. Hence, by installing the control unit in the platform, weight and complexity of the dummy device can be reduced.

According to a further exemplary embodiment, the platform and the dummy body comprise respective internal interface elements for transmitting control signals to the temperature-controlling device and/or for receiving status information of the temperature-controlling device.

According to a further exemplary embodiment, the internal interface elements comprise inductive coils for transmitting control signals to the temperature-controlling device and/or for receiving status information of the resistance temperature-controlling device in a wireless manner.

According to a further exemplary embodiment, the internal interface elements comprise electrical plug connections or electrical sliding contact for transmitting control signals to the temperature-controlling device and/or for receiving status information of the temperature-controlling device in a wireless manner. Hence, if a collision in the test procedure between the dummy body and a test vehicle happens, the dummy body may decouple from the platform, wherein the above-described examples for the internal interface elements decouple as well without damage. Hence, the likelihood that the dummy body comprises its complete functionality after collision is increased.

According to a further exemplary embodiment, the energy source unit is installed in the dummy device. Upon receipt of control signals from the control unit in the platform, a respective electrical power is provided for the resistance heating elements by the energy source unit integrated in the dummy body. Hence, by installing the energy source unit in the dummy body and the control unit in the platform, weight and complexity of the dummy device can be reduced.

According to a further exemplary embodiment, the energy source unit is installed in the platform. Hence, the dummy body may be free of the energy source unit so that the overall weight and complexity can be reduced. Furthermore, since energy source units have a high risk of exploding or starting to burn upon external impacts during collision, this risk can be reduced by installing the energy source unit inside the platform.

According to a further exemplary embodiment, the platform and the dummy body comprise respective internal power connections for transmitting electrical power from the platform to the resistance heating device. The internal power connection may comprise a (removable) power plug for transmitting electrical power from the platform to the heating device. Furthermore, the internal power connection may comprise an inductive coil for providing an inductive power transmission from the platform to the heating device. Hence, if a collision in the test procedure between the dummy body and a test vehicle happens, the dummy body may decouple from the platform, wherein the above-described examples for the internal power connections decouple as well without damage. Hence, the likelihood that the dummy body still has complete functionality after collision is increased.

According to a further exemplary embodiment, the external power connection is configured for receiving electrical power from an external energy source. For example, in an inactive parking position of the dummy device, the external power connection can be connected with an external power supply of the platform such that the electrical power is guided through the platform to the dummy body mounted onto the platform. The heating elements may heat the surface area before the test procedure and the active operating state of the dummy device, respectively. Thus, in the parking position, the surface area of the dummy body is heated to a predefined temperature. Next, the dummy device is decoupled from the external power supply and a test procedure starts. During the test procedure, the surface area cools down slowly or is heated by thermal energy stored in the thermal storage layer. Hence, by a respective dummy device according to the above-mentioned exemplary embodiment, it is not necessary to install an energy source inside the dummy body. Hence, the weight and complexity of the dummy body may be reduced.

According to a further exemplary embodiment, the fluid supply unit is arranged in the platform. Hence, the dummy body may be free of the fluid supply unit so that the overall weight and complexity can be reduced.

According to a further exemplary embodiment, the platform and the dummy body comprise respective internal valve connections for forming a fluid coupling for the temperature-controlling fluid so that the temperature-controlling fluid is supplyable between the temperature-controlling elements and the platform. The valve connections may form a removable valve connection such as a push-to-connect connection, a click-connection or a press fit connection. Hence, if a collision in the test procedure between the dummy body and a test vehicle happens, the dummy body and the valve connection may decouple from the platform without damage. Furthermore, on the platform side and the dummy body side, respective stop valves may be provided, so that upon decoupling of the dummy body from the platform, the stop valves interrupt the fluid connection so that leaking of temperature-controlling fluid out of the platform or the dummy body may be prevented. Hence, the dummy body still has its complete functionality after collision.

According to a further exemplary embodiment, the dummy device further comprises a fluid coupling arranged in the platform, wherein the fluid coupling is coupled to an external fluid supply unit for supplying temperature-controlling fluid in particular via the internal valve connections to the fluid temperature-controlled elements in the dummy body.

According to a further exemplary embodiment, the dummy device further comprises a temperature sensor for measuring the surface area temperature adjusted by the temperature-controlled element(s). The temperature sensor may be a thermistor which is a thermally sensitive resistors whose prime function is to exhibit a large, predictable and precise change in electrical resistance when subjected to a corresponding change in surface area temperature. The temperature sensor may be a thermocouple sensor, a resistance thermometer and/or a silicon bandgap temperature sensor. Furthermore, the temperature sensor may be an integrated circuit sensor. Additionally, further temperatures in the maybe installed, which measures the temperature of the temperature-controlling fluid when entering or leaving a respective fluid temperature-controlled element. Specifically, by providing a plurality of temperature sensors, one at the fluid inlet and one at the fluid outlet of the temperature-controlled element, the temperature difference between the fluid inlet and the fluid outlet may be measured, which may be indicative of the thermal energy that is absorbed or emitted by the fluid temperature-controlled element from the surface area.

According to a further exemplary embodiment, the temperature sensor is connected to the control unit for transmitting measured temperature values to the control unit. Hence, the control unit is configured to adjust the power supply to the resistance heating elements or the temperature-controlling fluid supply to the fluid temperature-controlled elements on the basis of the measured temperature values in order to adjust a target temperature. Furthermore, the control unit is configured to detect a failure function of a temperature-controlled element, if e.g. a measured temperature value as a function of the electrical input power transferred to the heating element does not comply with a respective target value.

According to a further exemplary embodiment, a plurality of temperature sensors for measuring the different surface area temperature adjusted by the temperature-controlled elements. Hence, the control unit receives the measured temperature values of the plurality of temperature sensors and the control unit is configured to control each temperature element individually in order to adjust each surface area individually. Hence a respective temperature profile along adjacent the surface areas of the dummy body may be adjusted.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 illustrates an exemplary dummy device with resistance heating elements according to an exemplary embodiment of the present invention.
Fig. 2A shows a schematical view of a surface structure of a dummy body comprising a temperature distribution layer, a thermal storage layer, and a radar absorbing layer according to an exemplary embodiment of the present invention.
Fig. 2B shows a schematical view of a surface structure of a dummy body comprising a radar absorbing layer according to an exemplary embodiment of the present invention.
Fig. 3 illustrates an exemplary dummy device, wherein a dummy body is fixed to a movable platform, according to an exemplary embodiment of the present invention.
Fig. 4 shows a schematical view of a resistance temperature element comprising conductive fibers according to an exemplary embodiment of the present invention.
Fig. 5 shows a schematical view of a resistance temperature element formed as a braided sleeve according to an exemplary embodiment of the present invention.
Fig. 6 illustrates an exemplary dummy device with fluid temperature-controlled elements according to an exemplary embodiment of the present invention.
Fig. 7 shows a schematical view of a surface structure of a dummy body with a fluid temperature-controlled element according to an exemplary embodiment of the present invention.
Fig. 8 illustrates an exemplary dummy device, wherein a dummy body with fluid temperature-controlled elements is fixed to a movable platform, according to an exemplary embodiment of the present invention.

### Detailed Description of Exemplary Embodiments

The illustrations in the drawings are schematic. It is noted that in different figures similar or identical elements are provided with the same reference signs.

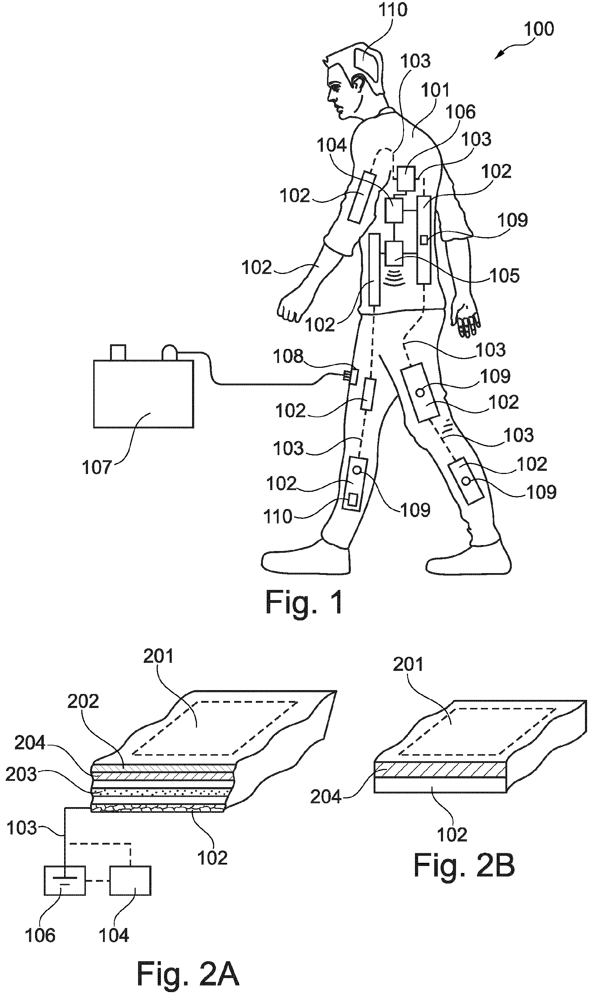

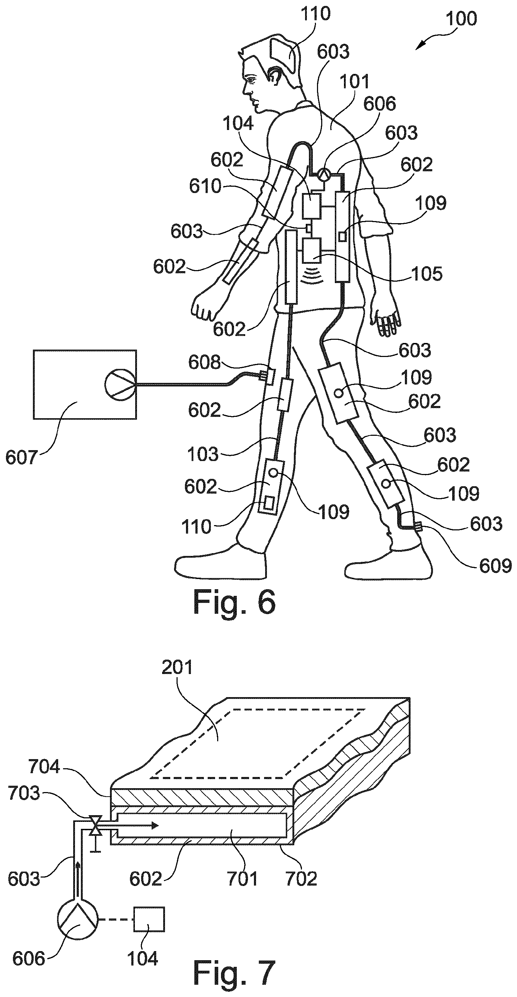

**Fig. 1** illustrates an exemplary dummy device 100 simulating a human being according to an exemplary embodiment of the present invention. The dummy device 100 is configured for testing driver assistance systems in vehicles. The dummy device 100 comprises a dummy body 101, and a temperature-controlling device functioning as a resistance heating device installed in the dummy body 101, wherein the resistance heating device comprises at least two resistance heating elements 102 which are configured for adjusting a temperature of a surface area 201 (see Fig. 2) of the dummy body 101. However, the embodiment shown in Fig. 1 may additionally comprise a temperature-controlling unit with respective fluid temperature-controlled elements 602 shown in Fig. 6.

The dummy body 101 comprises an internal supporting structure, such as a framework, which is covered by a respective cover surface or skin. To the supporting structure, a plurality of functional devices of the dummy device 100 may be fixed, for example, the below described control unit 104 or energy source unit 106. Furthermore, several activators, such as electric motors, for controlling and moving the movable body parts of the dummy body 101 are installed within the dummy body 101 and fixed to the internal supporting structure.

The resistance heating device comprises resistance heating element 102. The resistance heating elements 102 are coupled to a surface area 201 so that a temperature of a surface area 201 of the dummy body 101 can be adjusted. The surface area 201 of the dummy body 101 describes a specific surface section or the complete surface of the dummy body 101 which surface area 201 faces the environment of the dummy device 100. The respective resistance heating element 102 is an element for conversion of electric energy into heat. The heating element 102 comprises a heating resistor, so that heat is generated by the passage of electric current through a resistor through a process known as Joule heating.

By the resistance heating device, a temperature of the surface areas 201 of the dummy body 101 can be quickly and exactly adjusted. Hence, the respective surface area 201 of the dummy body 101 may comprise similar temperature and temperature profiles as a real object that is simulated by the dummy body 101 (e.g. a human being in the exemplary embodiment shown in Fig. 1). Hence, since the thermal radiation of the dummy body 101 is adjusted similarly to a real object to be simulated, a realistic test scenario for the sensors in a driver assistance system can be provided.

Furthermore, an infrared radiation device 110 may be installed in the dummy body 101. The infrared radiation device 110 comprises at least one infrared emitting element which is configured for simulating a temperature profile of a surface area 201 of the dummy body 101 by generating an infrared radiation that is indicative for the temperature profile measured by an infrared sensor of the driver assistance system to be tested. The infrared radiation device 110 may comprise radiation emitters, such as diodes, which radiate respective infrared radiation that can be measured by respective infrared sensors of the driver assistance system to be tested.

In the embodiment shown, the surface areas 201 are defined e.g. at the arm, the legs and/or the stomach and back area of the human dummy body 101. Each surface area 201 is heatable by a respective resistance heating element 102 or infrared radiation element. The surface areas 201 are arranged adjacent with respect to each other and can be heated individually by a respective resistance heating element 102. Hence, one surface area 201 defines for example a head section and another surface area 201 defines a stomach section of the human body. Real humans radiate at different surface areas 201 different temperature radiation. In other words, the head of a human may be hotter and therefore radiates more temperature radiation than for example a foot section of a human.

Since the human body 101 simulates in the exemplary embodiment a human being, the resistance heating elements 102 are configured to heat the surface areas 201 of the dummy body 101 up to 40° C.

The dummy device 100 further comprises a control unit 104, wherein the control unit 104 is connected to the resistance heating device for controlling the resistance heating device and the resistance heating elements 102, respectively, and/or for receiving status information of the resistance heating device heating device 102. The control unit 104 controls specifically the supply energy, specifically the supply power and voltage, for the resistance heating elements 102 in order to adjust the temperature radiation of the surface areas 201 of the dummy body 101. The control unit 104 may comprise an input interface element 105, wherein a predefined supply energy or a predefined temperature value can be input and the control unit 104 is configured for adjusting the resistance heating elements 102 accordingly. Additionally, the control unit 104 may comprise a storage unit for control data, so that the control unit 104 may take the respective control data from the storage unit during the test procedure.

Furthermore, the control unit 104 may receive status information of the resistance heating device and the resistance heating elements 102, respectively. Status information are for example current temperature values determined for example by the below described temperature sensors 109. Furthermore, the status information may comprise voltage or electrical power values in order to determine for example the operating state or if certain defects in the resistance heating elements 102 exist.

The control unit 104 comprises an interface element 105 configured for receiving control signals for controlling the resistance heating device and/or for transmitting status information of the resistance heating device. The interface element 105 comprises a wireless transmitter configured for receiving control signals and/or for transmitting status information of the resistance heating device in a wireless manner. In the embodiment shown in Fig. 1, the control unit 104 is installed within the dummy body 101.

In the shown embodiment, the dummy device 100 further comprises an internal energy source unit 106 for supplying the resistance heating unit 102 with electrical energy, wherein the energy source unit 106 is in particular a rechargeable battery unit. Hence, during the test procedure, energy can be taken from the energy source unit 106 for the resistance heating device, so that during the test procedure the respective resistance heating elements 102 can be heated for adjusting the surface areas 201 of the dummy body 101.

The resistance heating unit 102 are coupled to the internal energy source unit 106 and/or to the control unit 104 by supply cables 103 for transferring electrical power and/or control signals. The resistance heating unit 102 may be arranged in parallel with respect to each other and hence each resistance heating unit 102 is directly coupled with the internal energy source unit 106 and/or to the control unit 104. Furthermore, at least two or more resistance heating unit 102 may be coupled by respective supply cables 103 in series, one after another.

The dummy device 100 further comprises an external power connection 108 which is electrically coupled to the resistance heating device, wherein the external power connection 108 is configured for receiving electrical power from an external energy source 107. For example, in an inactive parking position of the dummy device 100, the external power connection 108 can be connected with an external power supply 107 such that the heating elements 102 heat the surface area 201 before the test procedure and the active operating state of the dummy device 100, respectively. Thus, in the parking position, the surface area 201 of the dummy body 101 is heated to a predefined temperature. Next, the dummy device 100 is decoupled from the external power supply 107 and a test procedure starts. During the test procedure, the surface area 201 cools down slowly or is heated by thermal energy stored in the thermal storage layer 203.

The external energy source 107 may also be connected via the external power connection 108 to the internal energy source 106. for example, in the inactive state of the dummy device 100, the external energy source 107 may charge a rechargeable battery functioning as the internal energy source 106, so that in the active state (during the test procedure) the heating elements 102 may be heated by energy from the internal energy source 106. The external power connection 108 may be a power plug for receiving electrical power from the external energy source 107. The external power connection 108 may also comprise an inductive coil for providing an inductive power transmission. Hence, in a parking position of the dummy device 100, electrical power can be transmitted via induction without having a physical plug connection.

The dummy device 100 further comprises temperature sensors 109 for measuring the surface area temperatures adjusted by the heating element(s) 102. The temperature sensors 109 are connected to the control unit 104 for transmitting measured temperature values to the control unit 104. Hence, the control unit 104 is configured to adjust the power supply to the resistance heating elements 102 on the basis of the measured temperature values in order to adjust a target temperature.

The control unit 104 receives the measured temperature values of the plurality of temperature sensors 109 and the control unit 104 is configured to control each temperature element individually in order to adjust each surface area 201 individually. Hence, a respective temperature profile along adjacent the surface areas 201 of the dummy body 101 may be adjusted.

**Fig. 2A** shows a schematical view of a surface structure of a dummy body 101 according to an exemplary embodiment of the present invention. Below a surface area 201, the resistance heating element 102 is arranged. Power supply cables 103 run inside the dummy body 101 e.g. in the skeleton area and not directly on the surface of the dummy body 101. The supply cables 103 are e.g. coupled with an internal energy source 106. The control unit 104 controls the energy supply to the resistance heating element 102 for adjusting the temperature generation.

The surface structure of the dummy device 100 further comprises a temperature distribution layer 202, wherein the temperature distribution layer 202 is arranged between the heating element 102 and the outer surface area 201 of the dummy body 101. The temperature distribution layer 202 comprises a higher thermal conductivity than the heating element 102. The temperature distribution layer 202 may be the outermost layer of the dummy body 101. The temperature distribution layer 202 comprises, due to its higher thermal conductivity than the heating element 102, a more homogeneous temperature distribution along the surface area 201 of the dummy body 101.

The surface structure of the dummy device 100 further comprises a thermal storage layer 203, wherein the thermal storage layer 203 is arranged between the heating element 102 and the surface area 201 of the dummy body 101. The thermal storage layer 203 comprises a higher thermal capacity than the heating element 102. The thermal storage layer 203 is arranged between the temperature distribution layer 202 and the resistance heating element 102. The thermal storage layer 203 may store the thermal energy, such that also without a continuous heat supply by the heating element 102, continuous heating of the surface area 201 is provided.

Hence, in an inactive parking position of the dummy device 100, an energy connection 108 with an external energy source 107 can be provided such that the heating elements 102 heat the surface area 201 before the test procedure and the active operating state of the dummy device 100, respectively. Thus, in the parking position, the thermal storage layer 203 is loaded by thermal energy and also the surface area 201 of the dummy body 101 is heated to a predefined temperature. Next, the dummy device 100 is decoupled from the external power supply 107 and a test procedure starts. During the test procedure, the surface area 201 is heated by thermal energy stored in the thermal storage layer 203.

The surface structure of the dummy device 100 further comprises a radar absorbing layer 204 for absorbing radar radiation reflected by the heating element 102. The radar absorbing layer 204 is arranged between the heating element 102 and a surface area 201 of the dummy body 101. Specifically, the radar absorbing layer 204 may be arranged between the resistance heating elements 102 and the thermal storage layer 203 and the temperature distribution layer 202.

**Fig. 2B** shows a further exemplary embodiment, wherein the surface structure of the dummy device 100 only comprises a radar absorbing layer 204 directly above the heat resistance element 102 for absorbing radar radiation reflected by the heating element 102. The radar absorbing layer 204 is arranged below the surface area 201 of the dummy body 101.

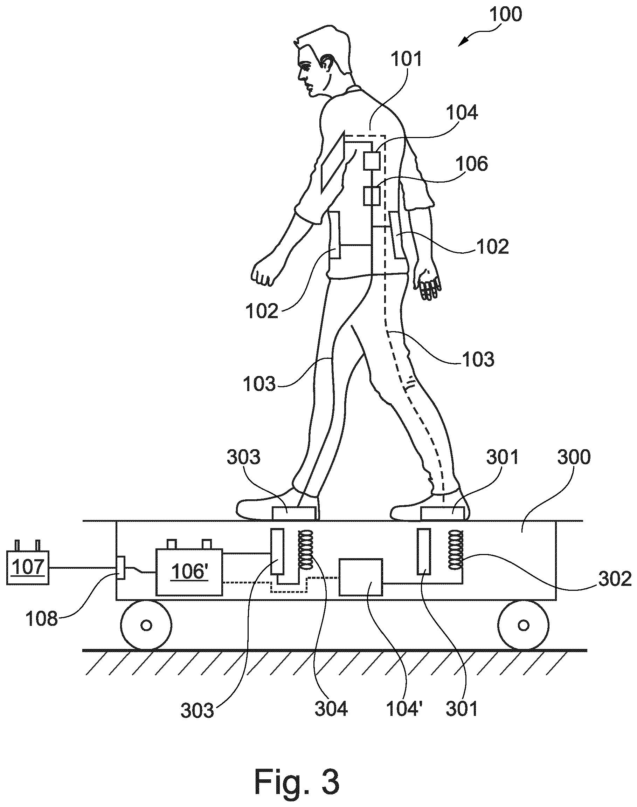

**Fig. 3** illustrates an exemplary dummy device 100, wherein a dummy body 101 is fixed to a movable platform 300, according to an exemplary embodiment of the present invention.

The dummy device 100 further comprises a movable platform 300 movable along a ground, wherein the dummy body 101 is attached onto the movable platform 300. The dummy body 101 is fixed by an attachment device, for example by a removable screw or plug connection, or by a magnetic force to the platform 300.

The dummy body 102 comprises resistance heating element 102. The resistance heating elements 102 so that a temperature of a surface area 201 of the dummy body 101 can be adjusted. Inside the dummy body 102, a control unit 104 may be installed for controlling the resistance heating elements 102. Alternatively, the control unit 104' may also be installed in the platform 300. For example, the energy source unit 106 may be installed inside the dummy body 101 and upon receipt of control signals from the control unit 104 in the platform 300, a respective electrical power is provided for the resistance heating elements 102.

The platform 300 and the dummy body 101 comprise respective internal interface elements 301 for transmitting control signals to the heating device and/or for receiving status information of the resistance heating device. The internal interface elements 301 comprise e.g. inductive coils 302 for transmitting control signals to the heating device and/or for receiving status information of the resistance heating device in a wireless manner. The internal interface elements 301 may also comprise electrical plug connections or electrical sliding contact for transmitting control signals to the heating device and/or for receiving status information of the resistance heating device in a wireless manner.

As shown in Fig. 3, the energy source unit 106 may also be installed in the dummy body 101. Upon receipt of control signals from the control unit 104' in the platform 300, a respective electrical power is provided for the resistance heating elements 102 by the energy source unit 106 integrated in the dummy body 101. Hence, by installing the energy source unit 106 in the dummy body 101 and the control unit 104' in the platform 300, weight and complexity of the dummy device 100 can be reduced.

As shown in Fig. 3, the energy source unit 106' is installed in the platform 300. Hence, the dummy body 101 may be free of the energy source unit 106 and also free of the control unit 104 so that the overall weight and complexity can be reduced. The platform 300 and the dummy body 101 comprise respective internal power connections 303 for transmitting electrical power from the platform 300 to the resistance heating device. The internal power connection 303 may comprise a (removable) power plug for transmitting electrical power from the platform 300 and the internal energy source 106' to the heating device. Furthermore, the internal power connection 303 may comprise an inductive coil 304 for providing an inductive power transmission from the platform 300 to the heating device.

The external power connection 108 in the platform 300 is configured for receiving electrical power from an external energy source 107. For example, in an inactive parking position of the dummy device 100, the external power connection 108 can be connected with an external energy source 107 such that the electrical power is guided via the external power connection 108 through the platform 300 via the internal power connection 303 to the dummy body 101 mounted onto the platform 300. The heating elements 102 may heat the surface area 201 before the test procedure and the active operating state of the dummy device 100, respectively.

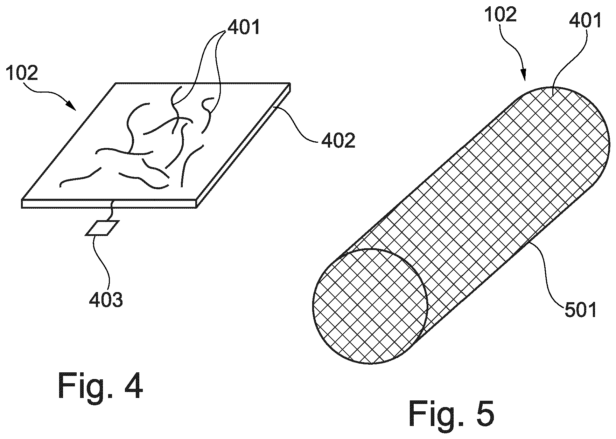

**Fig. 4** shows a schematical view of a resistance temperature element 102 comprising conductive fibers 401 for generating heat according to an exemplary embodiment of the present invention. The electrically conductive fibers 401 are made of metal material or carbon fibers 401. The fibers 401 of metal or carbon material can quickly generate heat and can be easily regulated by the applied voltage. Carbon fiber heaters are placed beneath the surface area 201 of the dummy body 101 and for example the final protective layer of the dummy body 101. The heating element 102 comprises a matrix material 402 in which the electrically conductive fibers 401 are inserted. The matrix material 402 may be made of an electrically isolating material. At the same time, the matrix material 402 may comprise proper temperature thermal conductive capacity. Hence, the matrix material 402 provides the ability of the resistance heating elements 102 on the one hand and on the other hand provides to its proper temperature thermal conductive capacity a good distribution of thermal radiation generated by the fibers 401.

According to a further exemplary embodiment, the dummy device 100 further comprises a low resistance connection contact 403 arranged between the resistance heating element 102 and the energy source unit 106 and/or between two connected resistance heating elements 102.

**Fig. 5** shows a schematical view of a resistance temperature element 102 formed as a braided sleeve 501 according to an exemplary embodiment of the present invention. Hence, the fibers 401 form a woven material, in particular a braided sleeve 501. A woven material may be made only of the fibers 401 and may thus be very flexible and adaptable to a variety of different shapes. The woven material may be additionally impregnated and soaked with matrix material 402. Specifically, the woven fibers 401 may form a fiber mat forming flat elements. The braided sleeve 501 may surround respective body part of the dummy body 101, such as an arm of a human body to be heated.

**Fig. 6** illustrates an exemplary dummy device 100 with fluid temperature-controlled elements 602 according to an exemplary embodiment of the present invention. The dummy device 100 is configured for testing driver assistance systems in vehicles. The dummy device 100 comprises a dummy body 101. The dummy device 100 comprises a temperature-controlling device installed in the dummy body 101, wherein the temperature-controlling device comprises more than two fluid temperature-controlled elements 602, which are configured for adjusting a temperature of a surface area 201 of the dummy body 101. However, the embodiment shown in Fig. 6 may additionally comprise respective resistance heating element 102 shown in Fig. 1. For example, the resistance heating elements 102 may be used for heating the surface area 201 and, in case that the surface area 201 has to be cooled, the fluid temperature-controlled elements 602 may be used to cool the surface area 201.

The dummy body 101 comprises an internal supporting structure, such as a framework, which is covered by a respective cover surface or skin. To the supporting structure, a plurality of functional devices of the dummy device 100 may be fixed, for example, a control unit 104 or energy source unit 106. Furthermore, several activators, such as electric motors, for controlling and moving the movable body parts of the dummy body 101 are installed within the dummy body 101 and fixed to the internal supporting structure.

The fluid temperature-controlled elements 602 are coupled to a surface area 201 so that a temperature of a surface area 201 of the dummy body 101 can be adjusted. The surface area 201 of the dummy body 101 describes a specific surface section or the complete surface of the dummy body 101 which surface area 201 faces the environment of the dummy device 100. By the fluid temperature-controlled elements 602, a temperature of the surface areas 201 of the dummy body 101 can be quickly and exactly adjusted. Hence, the respective surface area 201 of the dummy body 101 may comprise similar temperature and temperature profiles as a real object that is simulated by the dummy body 101 (e.g. a human being in the exemplary embodiment shown in Fig. 6). Hence, since the thermal radiation of the dummy body 101 is adjusted similarly to a real object to be simulated, a realistic test scenario for the sensors in a driver assistance system can be provided.

The fluid temperature-controlled elements 602 can be used to heat the surface areas 201. However, the fluid temperature-controlled elements 602 may also be used to cool the surface areas.

The temperature-controlling device comprises fluid ducts 603 for coupling the fluid temperature-controlled elements 602 (for example to couple two fluid temperature-controlled elements 602 together or for coupling the fluid temperature-controlled elements 602 to a central fluid supply unit 606) so that the temperature-controlling fluid is supplyable to or from the fluid temperature-controlled elements 602. The fluid ducts 603 may be formed of flexible material and may be guided along the dummy body. Specifically, the fluid ducts may run inside the dummy body along the supporting structure (e.g. in the skeleton area of the dummy body) and not directly on the surface.

The dummy device 100 further comprises a fluid supply unit 606, in particular a fluid pump, for supplying the temperature-controlling fluid to the fluid temperature-controlled elements 602. The fluid supply unit 606 may be for example an air blower. The fluid supply unit 606 is controlled by the control unit 104, so that dependent on the required temperature-controlling power, the fluid flow of the temperature-controlling fluid may be adjusted by the fluid supply unit 606.

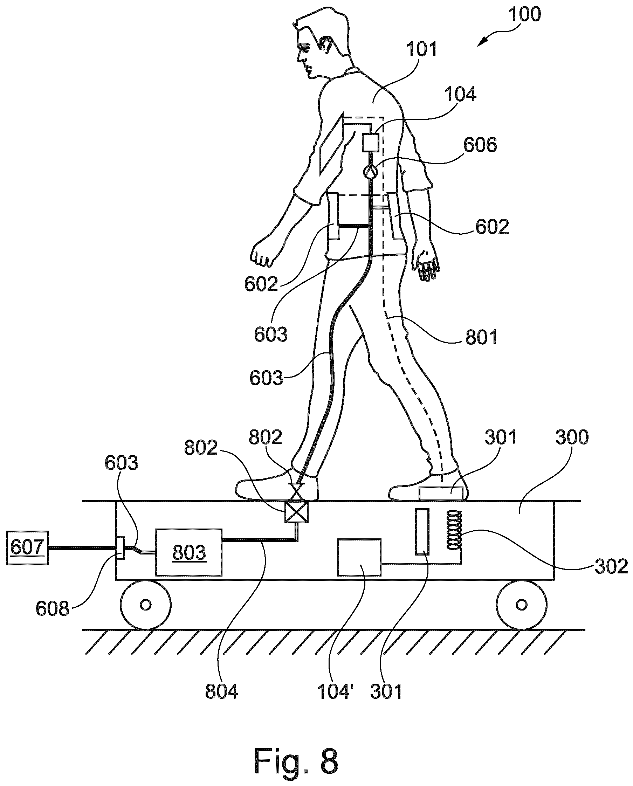

In the shown embodiment, the fluid supply unit 606 is installed in the dummy body 101. Alternatively, the fluid supply unit 606 may also be installed in a movable platform 300 as shown in Fig. 8.

The dummy device 100 further comprises a fluid temperature-controlling unit 610 for temperature-controlling the temperature-controlling fluid. The fluid temperature-controlling unit 610 comprises a heating unit for heating the temperature-controlling fluid. Additionally or attentively, the fluid temperature-controlling unit 610 comprises in particular a cooling unit for cooling the temperature-controlling fluid. The fluid temperature-controlling unit 610 is controlled by the control unit 104. In the shown embodiment, the fluid temperature-controlling unit 610 is installed in the dummy body 101 but may also be installed in the movable platform 300 (Fig. 8). Hence, during the test procedure, the temperature-controlled fluid may be controlled (fluid flow through the fluid temperature-controlled elements 602 and temperature of the temperature-controlling fluid) by the fluid temperature-controlling unit 610 and/or the fluid supply unit 606, so that during the test procedure the respective fluid temperature-controlled elements 602 can be temperature-controlled for adjusting the surface areas 201 of the dummy body 101.

The fluid temperature-controlled elements 602 may be arranged in parallel with respect to each other and hence each fluid temperature-controlled elements 602 is directly coupled via a fluid duct 603 with the fluid temperature-controlling unit 610 and/or the fluid supply unit 606. Furthermore, at least two or more fluid temperature-controlled elements 602 may be coupled by respective fluid ducts 603 in series, one after another.

In the embodiment shown, the surface areas 201 are defined e.g. at the arm, the legs and/or the stomach and back area of the human dummy body 101. Each surface area 201 is heatable or coolable by a fluid temperature-controlled element 602. The surface areas 201 are arranged adjacent with respect to each other and can be temperature-controlled individually by a respective fluid temperature-controlled element 602.

Since the human body 101 simulates in the exemplary embodiment a human being, the fluid temperature-controlled element 602 are configured to adjust the surface temperature in the surface areas 201 of the dummy body 101 around 40° C.

The control unit 104 is connected to the fluid temperature-controlling elements 602 for controlling the fluid flow of the temperature-controlling fluid through the fluid temperature-controlling elements 602, and/or for receiving status information of the fluid temperature-controlling elements 602. The control unit 104 controls specifically the fluid supply unit 606 for controlling the fluid flow of the temperature-controlling fluid. Furthermore, between the fluid temperature-controlling elements 602 and the fluid supply unit 606, respective control valves may be arranged which are controllable by the control unit 104 for controlling the fluid flow of the temperature-controlling fluid.

Furthermore, the control unit 104 may control the fluid temperature-controlling unit 610 for temperature-controlling (heating or cooling) the temperature-controlling fluid.

The control unit 104 may also comprise an input interface element 105, wherein a predefined temperature value can be input and the control unit 104 is configured for adjusting the respective fluid flow and e.g. the temperature of the temperature-controlling fluid accordingly. The control unit 104 may comprise a storage unit for control data, so that the control unit 104 may take the respective control data from the storage unit during the test procedure.

Furthermore, the control unit 104 may receive status information of the fluid temperature-controlled elements 602. Status information are for example fluid flow of temperature-controlled fluid or temperature of the temperature-controlled fluid received by respective sensors, e.g. temperature sensors 109. The control unit 104 receives the measured temperature values of the plurality of temperature sensors 109 and the control unit 104 is configured to control each fluid temperature-controlled elements 602 individually in order to adjust each surface area 201 individually. Hence, a respective temperature profile along adjacent the surface areas 201 of the dummy body 101 may be adjusted.

A fluid coupling 608 in the dummy body 601 may be provided for receiving temperature-controlling fluid from an external fluid supply unit 607. The external fluid supply unit 607 may be a fluid reservoir or an active fluid supply unit, such as a fluid pump. For example, in an inactive parking position of the dummy device 100, the fluid coupling 608 can be connected with an external fluid supply unit 607 such that the fluid temperature-controlling elements 602 temper (heat or cool) the surface areas 201 before the test procedure and the active operating state of the dummy device 100, respectively. Thus, in the parking position, the surface area 201 of the dummy body 101 is temperature-controlled to a predefined temperature. Next, the dummy device 100 is decoupled from the external fluid supply unit 607 and a test procedure starts.

The pre- temperature-controlled fluid may be filled and stored in a tank in the platform 300 or in the dummy body 101 during the inactive parking position, so that the stored temperature-controlling fluid may be used for temperature-controlling the fluid temperature-controlling elements 602 during the test procedure.

**Fig. 7** shows a schematical view of a surface structure of a dummy body 101 with a fluid temperature-controlled element 602. The surface structure of the dummy device 100 comprises a radar absorbing layer 204 directly above the fluid temperature-controlled element 602 for absorbing radar radiation reflected by the heating element 102. The radar absorbing layer 204 is arranged below the surface area 201 of the dummy body 101.

Each of the fluid temperature-controlled elements 602 comprises a fluid chamber 701 configured to be flushed by a temperature-controlling fluid, in particular air, for adjusting a temperature of the different surface areas 201 of the dummy body 101. The fluid temperature-controlled elements may comprise a housing 702 having an inner volume for forming the fluid chamber 701, wherein the temperature-controlling fluid may stream through the chamber 701. The walls of the housing 702 are heated or cooled by the temperature-controlled fluid. The walls of the housing 702 are in thermal contact with the respective surface area 201 of the dummy body so that thermal energy can be exchanged for temperature-controlling the respective surface. The housing 702 comprises a fluid inlet and a fluid outlet.

At the respective fluid inlet end/or the fluid outlet, a respective control valve 703 is provided in order to control the flow of temperature-controlling fluid into or out off the housing 702. The control valve 703 may be controlled by the control unit 104.

**Fig. 8** illustrates an exemplary dummy device 100 similar to the embodiment in Fig. 3, wherein a dummy body 101 fixed to a movable platform but is equipped with fluid temperature-controlled elements 602. The dummy device 100 further comprises the movable platform 300 movable along a ground, wherein the dummy body 101 is attached onto the movable platform 300. The dummy body 101 is fixed by an attachment device, for example by a removable screw or plug connection, or by a magnetic force to the platform 300.

Inside the dummy body 102, a control unit 104 may be installed for controlling the fixed to a movable platform. Alternatively, the control unit 104' may also be installed in the platform 300. For example, the fluid supply unit 606 may be installed inside the dummy body 101 and upon receipt of control signals from the control unit 104 in the platform 300, a respective temperature-controlling fluid flow is provided for the fluid temperature-controlled elements 602.

The platform 300 and the dummy body 101 comprise respective internal interface elements 301 for transmitting control signals to the temperature-controlling device and/or for receiving status information of the temperature-controlling device. The internal interface elements 301 comprise e.g. inductive coils 302 for transmitting control signals via a data cable to the control unit 104 or the temperature-controlling device and/or for receiving status information of the temperature-controlling device in a wireless manner. The internal interface elements 301 may also comprise electrical plug connections or electrical sliding contact for transmitting control signals to the temperature-controlling device and/or for receiving status information of the temperature-controlling device in a wireless manner.

Additionally or alternatively to the fluid supply unit_606, a platform pump 803 may be installed in the platform 300. Hence, the dummy body 101 may be free of fluid supply units and also free of the control unit 104 so that the overall weight and complexity can be reduced. The platform 300 and the dummy body 101 comprise respective connection valves 802 for providing a fluid exchange of the temperature-controlling fluid between the platform 300 and the dummy body 102. The platform further comprises respective platform fluid ducts 804 for transporting the temperature-controlling fluid.

The internal power connection 303 may comprise a (removable) power plug for transmitting electrical power from the platform 300 and the internal energy source 106' to the temperature-controlling device. Furthermore, the internal power connection 303 may comprise an inductive coil 304 for providing an inductive power transmission from the platform 300 to the temperature-controlling device.

Furthermore, an external fluid coupling 608 is installed in the platform 300 which is configured for receiving temperature-controlling fluid from an external fluid supply unit 607.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

**List of reference signs:**

| | | | |
|---|---|---|---|
| 100 | dummy device | 602 | fluid temperature-controlled elements |
| 101 | dummy body | | |
| 102 | resistance heating element | 603 | fluid duct |
| 103 | supply cable | 606 | fluid supply unit |
| 104 | control unit | 607 | external fluid supply unit |
| 105 | interface element | 608 | fluid coupling |
| 106 | internal energy source | | |
| | | 610 | fluid temperature-controlling unit |
| 107 | external energy source | | |
| 108 | external power connection | 701 | fluid chamber |
| 109 | temperature sensor | 702 | housing |
| 110 | infrared radiation device | 703 | control valve |
| 201 | surface area | 801 | data cable |
| 202 | temperature distribution layer | 802 | connection valve |
| 203 | thermal storage layer | 803 | platform pump |
| 204 | radar absorbing layer | 804 | platform fluid duct |
| 300 | platform | | |
| 301 | internal interface element | | |
| 302 | inductive coil | | |
| 303 | internal power connection | | |
| 304 | inductive coil | | |
| 401 | conductive fiber | | |
| 402 | matrix material | | |
| 403 | power contact | | |
| 501 | braided sleeve | | |

## Claims

1. Dummy device (100) for testing driver assistance systems in vehicles, the dummy device (100) comprises
a dummy body (101), and
a temperature-controlling device installed in the dummy body (101),
wherein the temperature-controlling device comprises at least two temperature-controlling elements,
wherein each temperature-controlling element is installed in different body sections of the dummy body (101) for individually adjusting a temperature of different surface areas (201) of the dummy body (101).

2. Dummy device (100) according to claim 1, comprising at least one of the following features
wherein each temperature-controlling element can be controlled individually such that the temperature of each surface area (201) of a body section is individually adjustable,
wherein the temperature-controlling device comprises more than 2, 4, 6, 10 or 12 temperature-controlling elements, and
wherein the temperature-controlling device is in particular configured to temper the surface areas (201) of the dummy body (101) up to 45° C.

3. Dummy device (100) according to claim 1 or 2,
wherein the temperature-controlling elements (102) comprise resistance heating elements (102) for generating heat,
wherein at least one of the resistance heating elements (102) comprises in particular electrically conductive fibers (401) for generating heat,
wherein the electrically conductive fibers (401) are made of metal material or carbon fibers,
wherein the fibers form in particular a woven material, in particular a braided sleeve (501),
wherein the heating element (102) comprises in particular a fibre density of 100 g/m² to 700 g/m², in particular 200 g/m² to 400 g/m²,
wherein the heating element (102) comprises in particular 500 to 3500 fiber rovings/m², more in particular 1000-2000 fiber rovings/m².

4. Dummy device (100) according to claim 3,
wherein the resistance heating element (102) comprises a supply cable (103) running from the resistance heating element (102) to the inside of the dummy body (101).

5. Dummy device (100) according to claim 3 or 4, further comprising
an energy source unit (106) for supplying the resistance heating unit with electrical energy,
wherein the energy source unit (106) unit is in particular a rechargeable battery unit,
wherein the energy source unit (106) is in particular configured for transmitting electrical power with a voltage range between 9 V and 60 V and/or with a Current range in the range of 20 A to 60 A, and/or
wherein the energy source unit (106) is configured for transmitting electrical power in a constant manner or in a pulsed manner,
wherein the dummy device (100) further comprising in particular a low resistance connection contact arranged between the resistance heating element (102) and the energy source unit (106) and/or between two connected resistance heating element (102),
wherein the low resistance connection element (102) is configured for providing a resistance of less than 1 to 2 Ohm with an applied voltage of 24 Volts or 0,5 to 1 Ohm with an applied voltage of 48 Volts.

6. Dummy device (100) according to claim 5, further comprising one of the following features
an external power connection (108) which is electrically coupled to the temperature-controlling device,
wherein the external power connection (108) is configured for receiving electrical power from an external energy source (107),
wherein the external power connection (108) comprises in particular a power plug for receiving electrical power from the external energy source (107), and/or
wherein the external power connection (108) comprises an inductive coil for providing an inductive power transmission,
wherein the energy source unit (106) is installed in the dummy device (100) and,
wherein the external power connection (108) is configured for receiving electrical power from an external energy source (107).

7. Dummy device (100) according to claims 1 to 6,
wherein the temperature-controlling elements comprise fluid temperature-controlled elements (602),
wherein each of the fluid temperature-controlled elements (602) comprises a fluid chamber configured to be flushed by a temperature-controlling fluid, in particular air, for adjusting a temperature of the different surface areas (201) of the dummy body (101),
wherein the temperature-controlling device comprises in particular fluid ducts (603) for coupling the fluid temperature-controlled elements (602) so that the temperature-controlling fluid is supplyable to or from the fluid temperature-controlled elements (602).

8. Dummy device (100) according to claim 7, further comprising one of the following features
a fluid supply unit (606), in particular a fluid pump, for supplying the temperature-controlling fluid to the fluid temperature-controlled elements (602),
wherein the fluid supply unit (606) is in particular installed in the dummy device (100),
a fluid temperature-controlling unit (610) for temperature-controlling the temperature-controlling fluid,
wherein the fluid temperature-controlling unit (610) comprises in particular a heating unit for heating the temperature-controlling fluid,
wherein the fluid temperature-controlling unit (610) comprises in particular a cooling unit for cooling the temperature-controlling fluid,
wherein the fluid temperature-controlling unit (610) is installed in particular in the dummy device (100), and
a fluid coupling (608) which is coupled to the fluid temperature-controlled elements (602),
wherein the fluid coupling (608) is configured for receiving temperature-controlling fluid from an external fluid supply unit (607).

9. Dummy device (100) according to one of the claims 1 to 8, further comprising
a radar absorbing layer (204) for absorbing radar radiation reflected by the temperature-controlling element,
wherein the radar absorbing layer (204) covers the temperature-controlling element,
wherein the radar absorbing layer (204) comprises in particular a material, in particular Condura, having a radar permittivity similar to an object to be simulated by the dummy body (101)
wherein the radar absorbing layer (204) comprises in particular a material having
a real part of permittivity e' between 10 to 45,
an imaginary part of permittivity of e"=between 3 to 20 and/or
an effective conductivity σe=1-12 S/m
when being penetrated with electromagnetic radiation between 5 and 85 GHz.

10. Dummy device (100) according to one of the claims 1 to 9, further comprising
a control unit (104),
wherein the control unit (104) is connected to the temperature-controlling device for controlling the temperature-controlling device and/or for receiving status information of the temperature-controlling device,
wherein the control unit (104) comprises in particular an interface element (105) configured for receiving control signals for controlling the temperature-controlling device and/or for transmitting status information of the temperature-controlling device,
wherein the interface element (105) comprises in particular a wireless transmitter configured for receiving control signals and/or for transmitting status information of the temperature-controlling device in a wireless manner, wherein the interface element (105) comprises in particular a plug connection configured for receiving control signals and/or for transmitting status information of the temperature-controlling device in a wire bond manner.

11. Dummy device (100) according to claim 10,
wherein the control unit (104) is installed within the dummy body (101).

12. Dummy device (100) according to one of the claims 1 to 11, wherein the dummy device (100) comprises at least one of the following features:
a movable platform (300) movable along a ground,
wherein the dummy body (101) is attached onto the movable platform (300),
wherein a control unit (104) is installed in particular in the dummy device (100),
wherein a control unit (104) is installed in the platform (300),
wherein the platform (300) and the dummy body (101) comprise in particular respective internal interface elements (301) for transmitting control signals to the temperature-controlling device and/or for receiving status information of the temperature-controlling device,
wherein the internal interface elements (301) comprise in particular inductive coils (302) for transmitting control signals to the temperature-controlling device and/or for receiving status information of the temperature-controlling device in a wireless manner, or
wherein the internal interface elements (301) comprise in particular electrical plug connections or electrical sliding contact for transmitting control signals to the temperature-controlling device and/or for receiving status information of the resistance temperature-controlling device in a wireless manner,
wherein the energy source unit (106) is installed in the platform (300),,
wherein the platform (300) and the dummy body (101) comprise in particular respective internal power connections (303) for transmitting electrical power from the platform (300) to the tampering device,
wherein the internal power connection (303) comprises a power plug for transmitting electrical power from the platform (300) to the tampering device, and/or
wherein the internal power connection (303) comprises an inductive coil (304) for providing an inductive power transmission from the platform (300) to the temperature-controlling device,
wherein the fluid supply unit (606) is arranged in the platform (300) wherein the platform (300) and the dummy body (101) comprise respective internal valve connections (802) for forming a fluid coupling for the temperature-controlling fluid so that the temperature-controlling fluid is supplyable between the temperature-controlling elements (602) and the platform (300), and
a fluid coupling (608) arranged in the platform (300),
wherein the fluid coupling (608) is coupled to an external fluid supply unit (607) for supplying temperature-controlling fluid to the fluid temperature-controlled elements (602).

13. Dummy device (100) according to one of the claims 1 to 12, further comprising
a temperature sensor (109) for measuring the surface area (201) temperature adjusted by the temperature-controlling element,
wherein the temperature sensor (109) is in particular connected to the control unit (104) for transmitting measured temperature values to the control unit (104),
wherein the dummy device (100) comprises in particular a plurality of temperature sensors (109) for measuring the different surface area temperatures adjusted by the temperature-controlling elements.

14. Dummy device (100) for testing driver assistance systems in vehicles, the dummy device (100) comprises
a dummy body (101), and
an infrared radiation device (110) installed in the dummy body (101), wherein the infrared radiation device (110) comprises at least one infrared emitting element which is configured for simulating a temperature profile of a surface area (201) of the dummy body (101) by generating an infrared radiation that is indicative for the temperature profile measured by an infrared sensor of the driver assistance system to be tested.

15. Method for testing driver assistance systems in vehicles with a dummy device (100) according to one of the claims 1 to 13, wherein the method comprises
adjusting a temperature of a surface area (201) of the dummy body (101) by the at least two temperature-controlling elements.
